# EUROPÄISCHE PATENTSCHRIFT

(11) **EP 1 069 963 B1**
(45) Veröffentlichungstag und Bekanntmachung des Hinweises auf die Patenterteilung: **29.10.2008**
(21) Anmeldenummer: 99914428.0
(22) Anmeldetag: 24.02.1999
(51) Int. Cl.: B21D 53/88

(54) **VERFAHREN UND VORRICHTUNG ZUM HERSTELLEN GEBOGENER FEDERBANDABSCHNITTE**
METHOD AND DEVICE FOR PRODUCING CAMBERED SECTIONS OF SPRING BAND
PROCEDE ET DISPOSITIF POUR LA PRODUCTION DE SEGMENTS DE RESSORT A RUBAN CINTRES

(30) Priorität: 07.04.1998 DE 19815529
(43) Veröffentlichungstag der Anmeldung: 24.01.2001
(73) Patentinhaber: ROBERT BOSCH GMBH, 70442 Stuttgart (DE)
(72) Erfinder: WILHELM, Manfred, D-71735 Eberdingen (DE); BLUM, Thomas, D-72800 Eningen (DE); MAZURKIEWICZ, Julius, B-3290 Diest (BE); TROESTER, Theo, D-72768 Reutlingen (DE)
(86) Internationale Anmeldenummer: PCT/DE1999/000492
(87) Internationale Veröffentlichungsnummer: WO 1999/051375

(56) Entgegenhaltungen:
- DE-A- 3 619 782
- DE-A- 3 742 869
- DE-A- 3 815 304
- DE-B- 1 109 495
- DE-C- 458 563
- US-A- 1 485 313
- US-A- 4 036 042

## Beschreibung

### Stand der Technik

Die Erfindung betrifft ein Verfahren und eine Vorrichtung zum Herstellen gebogener Federbandabschnitte insbesondere mit über die Abschnittslänge variierender Materialstärke.

Aus der WO 94/17932 ist ein Verfahren und eine Vorrichtung zum Herstellen von Metallstreifen mit variierender Materialstärke bekannt. Dabei wird ein Bandmaterial konstanter Dicke und Breite durch ein Paar einander gegenüberliegenden Walzen gezogen, wobei der Abstand der Walzen variiert wird, um so das Bandmaterial mit über dessen Länge unterschiedlicher Dicke zu formen, und anschließend einer Wärmebehandlung unterzogen.

Mit der NL 7807040 ist ein Verfahren und eine Vorrichtung zum Herstellen von Fahrradfelgen bekannt geworden, bei denen ein Profilstab über 3 Rollen vorgebogen und über eine vierte Rolle zurückgebogen wird. Diesem System haftet der Nachteil an, dass nur Profilstäbe mit definierter Länge bearbeitet werden können.

### Vorteile der Erfindung

Das erfindungsgemäße Verfahren sowie die erfindungsgemäße Vorrichtung zum Herstellen gebogener Federbandabschnitte mit den Merkmalen der unabhängigen Ansprüche haben den Vorteil, daß in einem einzigen Verfahrensgang, der einem Durchlauf durch die Vorrichtung entspricht, Federbandabschnitte von einem Bandmaterialrohling mit variabler Materialstärke endgefertigt werden. Das Biegen und Rückbiegen erfolgt dabei unter kontinuierlichem Vorschub des Federbandes, während zum Abtrennen der Federbandabschnitte jeweils ein kurzer Transportstopp eingelegt wird. Die endgefertigten Federbandabschnitte sind toleranzgenau mit den vorgegebenen Biegeradien gefertigt und durch die Rückbiegung absolut formstabil. Durch die Verschiebbarkeit der vorzugsweise als Rollen ausgeführten mittleren Auflagestelle der Biegeeinheit und der Auflagestelle der Rückbiegeeinheit, deren Zustellung bezüglich des Federbandes NC-gesteuert ist, wird der unterschiedlichen Materialstärke Rechnung getragen und das Federband in allen Bereichen gleichermaßen plastisch verformt. Gleichzeitig können auch verschiedene Biegeradien innerhalb eines Federbandabschnittes realisiert werden. Die NC-Steuerung erfolgt mittels vorgegebener Programme, die die sich über den Vorschub ändernde Materialstärke und Materialbreite des Federbandes, die gewünschten Biegeradien der Federbandabschnitte sowie weitere, das Fertigungsergebnis beeinflussende Parameter, wie Bandhärte, vorheriges Richten des Federbandes, Wicklungssinn des Federbandes auf einer Vorratsspule etc., berücksichtigen.

Durch die in den weiteren Ansprüchen aufgeführten Maßnahmen sind vorteilhafte Weiterbildungen und Verbesserungen des im Anspruch 1 angegebenen Verfahrens bzw. der im Anspruch 11 angegebenen Vorrichtung möglich.

Gemäß einer bevorzugten Ausführungsform der Erfindung ist die Trenneinheit in der Biegeeinheit integriert, was dadurch realisiert wird, daß die in Federbandvorschubrichtung letzte Auflagestelle der Biegeeinheit als eine über die maximale Federbandbreite sich erstreckende Schnittkante ausgebildet ist, an der ein quer zum Federband bewegtes Schneidemesser vorbeigeführt ist. Durch diese Integration von Trenneinheit und Biegeeinheit werden Bauelemente eingespart und die Vorrichtung wird fertigungstechnisch kostengünstiger und kompakter.

Gemäß einer vorteilhaften Ausführungsform der Erfindung erfolgt eine Programminitiierung zum Biegen, Rückbiegen und Abtrennen der Federbandabschnitte vom Federband durch sog. Triggerlöcher, die zwischen den einzelnen Federbandabschnitten im Federband vorgesehen sind und deren Einlaufen in die Biegeeinheit sensiert wird und zum Triggern der NC-Steuerung führt. Anstelle der Triggerlöcher kann auch eine Banddickenmessung vorgesehen werden, die die Triggerung der NC-Steuerung abhängig von der Erfassung einer bestimmten Banddicke durchführt.

Zur Einhaltung höchster Fertigungstoleranzen ist gemäß einer vorteilhaften Ausführungsform der Erfindung eine mit einem Bilderfassungssystem kombinierte Korrektureinrichtung vorgesehen, die die Programme für die NC-Steuerung von Biege-und/oder Rückbiegeeinheit in Abhängigkeit von Sollwertabweichungen korrigiert. Die Sollwertabweichungen werden mittels des Bilderfassungssystems, das zumindest ein Teil der endgefertigten Federbandabschnitte optisch vermißt und mit einem Sollwert vergleicht, ermittelt.

Gemäß einer vorteilhaften Ausführungsform der Erfindung erfolgt die Zuführung des Federbands mittels zweier am Federband sich gegenüberliegenden, angetriebenen Vorschubwalzen oder -rollen, die das Federband von einem Vorratswickel abziehen und der Biegeeinheit zuführen. Um dabei ein Ausknicken des Federbandes zu verhindern, ist gemäß einer weiteren Ausführungsform der Erfindung zwischen Vorschubrollen und Biegeeinheit eine enge Bandführung mittels mehrerer Führungswalzen oder -rollen und/oder Führungsschienen gewährleistet.

### Zeichnung

Die Erfindung ist anhand eines in der Zeichnung dargestellten Ausführungsbeispiels einer Vorrichtung in der nachfolgenden Beschreibung näher erläutert. Es zeigen jeweils in schematischer Darstellung:
- Fig. 1: eine Seitenansicht einer Vorrichtung zum Herstellen gebogener Federbandabschnitte,
- Fig. 2: ausschnittweise eine vergrößerte Seitenansicht eines zur Herstellung der gebogenen Federbandabschnitte verwendeteten Federbands mit variabler Materialstärke.

### Beschreibung des Ausführungsbeispiels

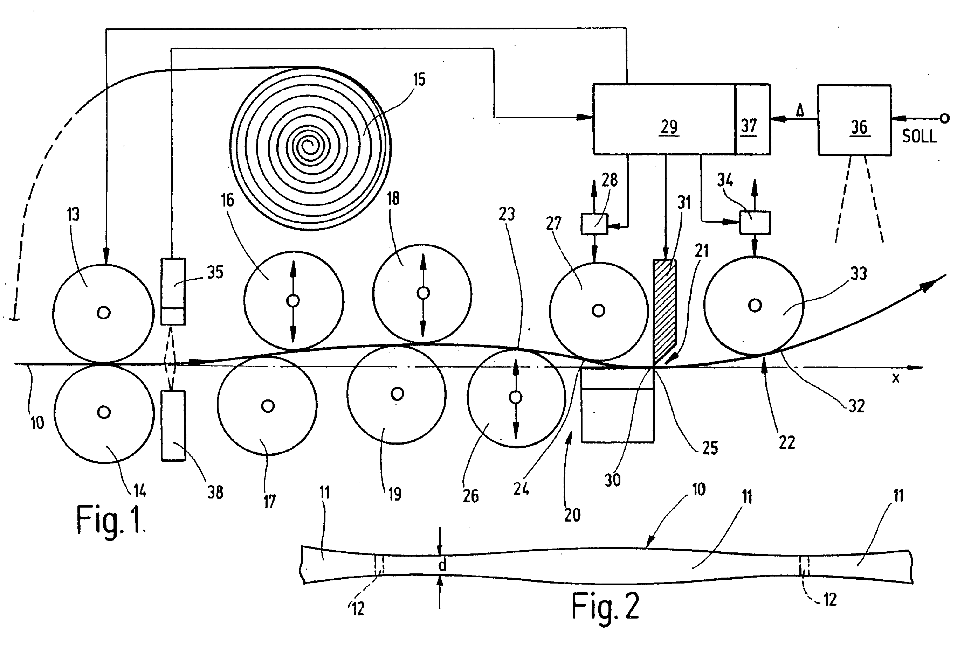

Der in Fig. 1 schematisch in Seitenansicht dargestellten Vorrichtung zum Herstellen gebogener Federbandabschnitte wird ein Federband 10 zugeführt, wie es in Fig. 2 ausschnittweise und vergrößert schematisch dargestellt ist. Im Federband 10 sind einzelne, gleichartige Federbandabschnitte 11 hintereinander fortlaufend festgelegt, deren Anfang und Ende durch sog. Triggerlöcher 12 im Federband 10 markiert sind. Innerhalb eines jeden Federbandabschnittes 11 variiert die Materialstärke oder Banddicke d des Federbandes 10, wie dies in Fig. 2 verdeutlicht ist. In einem realistischen Ausführungsbeispiel schwankt dabei die Banddicke d zwischen einem maximalen Wert von 1,2mm und einen Minimalwert von 0,4mm, wobei die Banddicke d von der Mitte eines Federbandabschnittes 11 zu den Abschnittsenden hin abnimmt.

Die Vorrichtung weist in Federbanddurchlauf- oder -vorschubrichtung hintereinander angeordnet ein oder zwei Paare von auf gegenüberliegenden Bandseiten des Federbands 10 angreifende Vorschubrollen 13,14, die motorisch angetrieben und NC-gesteuert sind und das Federband 10 von einem Vorratswickel 15 abziehen, mehrere, hier vier, ggf. auch sechs, Führungsrollen 16 - 19, die paarweise auf gegenüberliegenden Bandseiten des Federbandes 10 angreifen und antriebslos sind, eine Biegeeinheit 20, eine Trenneinheit 21 und eine Rückbiegeeinheit 22 auf. Die beiden auf der Oberseite des Federbands 10 angreifenden Führungsrollen 16,18 sind in vertikalrichtung, also rechtwinklig zum Federband 10, verschiebbar ausgebildet und können manuell verstellt werden, um eine enge Führung des Federbandes 10 ohne Möglichkeit zum Ausknicken zu gewährleisten. Anstelle der oder zusätzlich zu den Führungsrollen 16 - 19 können auch Führungsschienen vorgesehen werden, die ebenfalls paarweise auf gegenüberliegenden Bandseiten des Federbandes 10 liegen.

Die Biegeeinheit 20 umfaßt drei voneinander beabstandete Auflagestellen 23 - 25, die in Durchlaufrichtung des Federbandes 10 aufeinanderfolgend abwechselnd an der einen und anderen Bandseite anliegen. Die in Vorschubrichtung des Federbandes 10 gesehene erste und zweite Auflagestelle 23,24 werden jeweils vom Umfang einer Walze oder Rolle 26 bzw. 27 gebildet, deren Achsen quer zum Federband 10 in Richtung der Banddicke d verschieblich ausgebildet sind. Die erste Rolle 26 ist dabei manuell verstellbar, während die Verstellung der zweiten Rolle 27, im folgenden Biegerolle 27 genannt, von einem Stellmotor 28 bewirkt wird, der von einer NC-Steuereinheit 29 gesteuert wird. Die dritte Auflagestelle 25 der Biegeeinheit 20 wird von einer Schnittkante 30 gebildet, die größer ist als die Breite des Federbandes 10 und zum Abtrennen eines Federbandabschnittes 11 mit einem Schneidmesser 31 zusammenwirkt, das vertikal, also quer zum Federband 10, bewegt und an der Schnittkante 30 vorbeigeführt wird. Schnittkante 30 und Schneidmesser 31 bilden die Trenneinheit 21, die damit am Ende der Biegeeinheit 20 angeordnet und durch die Auslegung der vierten Auflagestelle 25 als Schnittkante 30 in die Biegeeinheit 20 integriert ist.

Die der Trenneinheit 21 nachgeordnete Rückbiegeeinheit 22 besteht aus einer auf der gleichen Bandseite des Federbandes 10 wie die mittlere Auflagestelle 24 der Biegeeinheit 20, also wie die Biegerolle 27, angreifende vierte Auflagestelle 32, die hier ebenfalls von dem Umfang einer Walze oder Rolle, der sog. Rückbiegerolle 33, gebildet ist. Die Rollenachse der Rückbiegerolle 33 ist ebenfalls quer zum Federband 10 in Richtung Banddicke d verschiebbar ausgebildet. Die Verschiebung der Rückbiegerolle 33, die sog. Zustellung, wird wiederum mittels eines Stellmotors 34 bewirkt, der von der NC-Steuereinheit 29 gesteuert wird.

Die die Stellmotoren 28,34 von Biegerolle 27 und Rückbiegerollen 33 steuernde NC-Steuereinheit 29 arbeitet nach vorgegebenen Programmen, in welchen sowohl die sich ändernde Materialstärke d und Materialbreite des Federbandabschnittes 11 als auch evtl. gewünschte, zonenbezogen unterschiedliche Biegeradien des Federbandabschnittes 11 berücksichtigt sind, wenn der Federbandabschnitt 11 mit unterschiedlichen Biegeradien gebogen werden soll. Beispielsweise kann ein solcher Federbandabschnitt 11 einen mittigen großen Biegeradius und zwei kleinere nahe den Abschnittsenden plazierte Biegeradien mit entgegengesetztem Biegesinn aufweisen. Diese auf den Federbandabschnitt 11 angewandten Programme werden mittels der zwischen den einzelnen Federbandabschnitten 11 liegenden Triggerlöcher 12 im Federband 10 aufgerufen. Die Triggerlöcher 12 werden von einem mit einer Lichtquelle 38 zusammenwirkenden, vor den Führungsrollen 16 - 19 angeordneten, optischen Sensor 35 erkannt, der daraufhin ein Triggersignal an die Steuereinheit 29 liefert und dadurch den Programmablauf abruft. Die Zustellbewegung der Biegerolle 27 erfolgt dabei um einen größeren Betrag als es für den gewünschten Biegeradius des Federbandabschnittes 11 erforderlich ist. Um diesen Betrag wird dann der Federbandabschnitt 11 in der Rückbiegeeinheit 22 mittels entsprechender Zustellung der Rückbiegerolle 33 in entgegengesetzte Richtung zurückgebogen. Der Rückbiegegrad, der erforderlich ist, um die Formstabilität des gebogenen Federbandabschnitts 11 zu gewährleisten, wird empirisch ermittelt. Als vorteilhaft hat sich je nach Qualität des Federbandes 10 ein Rückbiegegrad von 10 - 20% des in der Biegeeinheit 20 erzielten Biegegrads erwiesen. Da der Biegeradius des endgefertigten Federbandabschnitts 11 vorgegeben ist, ist somit die Zustellbewegung der Biegerolle 27 so programmiert, daß in der Biegeeinheit 20 ein um den Rückbiegegrad größerer Biegegrad des Federbandabschnitts 11 erzeugt wird. Die Biegung und Rückbiegung der einzelnen Federbandabschnitte 11 im Federband 10 erfolgt bei kontinuierlicher Vorschubbewegung des Federbands 10. Zur Abtrennung des endgefertigten Federbandabschnitts 11 von dem Federband 10 durch die ebenfalls von der NC-Steuereinheit 29 gesteuerten Trenneinheit 21 wird der Bandtransport kurzzeitig gestoppt.

Zur Erzielung geringer Fertigungstoleranzen ist ein Bilderfassungssystem 36 vorgesehen, mit welchem zumindest ein Teil der endgefertigten Federbandabschnitte 11 optisch vermessen und Abweichungen von einer Sollwertvorgabe ermittelt werden. Die mittleren Sollwertabweichungen werden einer Korrektureinrichtung 37 zugeführt, die entsprechende Parameter in den Programmen der NC-Steuereinheit 29 verändet, so daß ein Regelkreis zur Biegegradkorrektur entsteht. Die in der NC-Steuereinheit 29 abgespeicherten Biege- und Rückbiegeprogramme berücksichtigen neben der variablen Materialstärke und den ggf. zonenbezogen unterschiedlich vorgegebenen Biegeradien auch weitere Parameter, die das Biegeergebnis beeinflussen, so die Bandbreite, die Bandhärte, ein evtl. vorgeschaltetes Bandrichten, der Wicklungssinn des Federbandes 10 auf dem Vorratswickel 15, etc. Die abgespeicherten Programme sind auf eine bestimmte Form der endgefertigten Federbandabschnitte 11 abgestimmt und müssen für veränderte Formen der Federbandabschnitte 11 neu erstellt bzw. entsprechend modifiziert werden.

## Patentansprüche

1. Verfahren zum Herstellen gebogener Federbandabschnitte (11), die aus einem aus einstückig aneinander angeordneten Federbandabschnitten gebildeten Federband hergestellt werden, und das Federband programmgesteuert zwischen drei in Federbandvorschubrichtung voneinander beabstandeten, aufeinander folgend abwechselnd auf einer der beiden Bandseiten des Federbandabschnittes anliegenden Auflagestellen gebogenen und anschließend an einer nachfolgenden Auflagestelle wieder zurückgebogen wird und der so behandelte Federbandabschnitte vom Federband abgetrennt wird, **dadurch gekennzeichnet, dass** die mittlere der drei Auflagestellen (24) für die Federbandbiegung und die vierte Auflagestelle für die Federbandrückbiegung jeweils quer zum Federband (10) in Richtung Banddicke (d) verschiebbar ausgebildet und ihre Querverschiebungen nach vorgebbaren Programmen gesteuert werden.

2. Verfahren nach Anspruch 1, **dadurch gekennzeichnet, dass** der Biegegrad des Federbandes (10) in den drei Auflagestellen (23-25) um den Rückbiegegrad an der vierten Auflagestelle (32) größer eingestellt wird als der geforderte Endbiegeradius des Federbandabschnitts (11).

3. Verfahren nach Anspruch 1 oder 2, **dadurch gekennzeichnet, dass** der Rückbiegegrad empirisch bestimmt wird.

4. Verfahren nach Anspruch 1 oder 2, **dadurch gekennzeichnet, dass** der Rückbiegegrad mit 10 - 20% des Biegegrads gewählt wird.

5. Verfahren nach einem der Ansprüche 1 - 4, **dadurch gekennzeichnet, dass** die Programmme die sich ändernde Materialstärke innerhalb der Federbandabschnitte (11) berücksichtigen.

6. Verfahren nach einem der Ansprüche 1 - 5, **dadurch gekennzeichnet, dass** die letzte der drei Auflagestellen (25) für die Federbandbiegung als Schnittkante (30) ausgebildet wird, an der zur Abtrennung der Federbandabschnitte (11) ein Schneidmesser (31) vorbeigeführt wird.

7. Verfahren nach Anspruch 6, **dadurch gekennzeichnet, dass** die übrigen Auflagestelle (23,24,32) vom Umfang einer Walze oder Rolle (26,27,33) gebildet werden.

8. Verfahren nach einem der Ansprüche 5 - 7, **dadurch gekennzeichnet, dass** die im Federband (10) aufeinanderfolgenden Federbandabschnitte (11) durch Triggerlöcher (12) im Federband (10) markiert sind und daß die Triggerlöcher (12) zum Steuern von Anfang und Ende der Biege- und Rückbiegeprogramme sowie des Auslösens des Trennvorgangs verwendet werden.

9. Verfahren nach einem der Ansprüche 1 - 8, **dadurch gekennzeichnet, dass** zumindest ein Teil der abgetrennten Federbandabschnitte (11) optisch vermessen und mit sollwertvorgaben verglichen wird und daß die mittleren Abweichungen von den Sollwerten zur Korrektur der Biege-und Rückbiegeprogramme verwendet werden.

10. Verfahren nach einem der Ansprüche 1 - 9, **dadurch gekennzeichnet, dass** das Biegen und Rückbiegen des Federbandes (10) mit kontinuierlichem Federbandvorschub durchgeführt wird, der zum Abtrennen der Federbandabschnitte (11) jeweils kurzzeitig unterbrochen wird.

11. Vorrichtung zum Herstellen gebogener Federbandabschnitte (11), insbesondere mit über die Abschnittelänge variabler Materialstärken (d), mit einer aus drei voneinander beabstandeten Auflagestellen (23 bis 25) bestehenden Biegeeinheit (20), durch die ein von den hintereinander einstückig angeordneten Federbandabschnitten (11) gebildetes Federband (10) so hindurchführbar ist, dass die Auflagestellen (23 bis 25) in Vorschubrichtung des Federbandes (10) aufeinander folgend abwechselnd an der einen und der anderen Bandseite anliegen, wobei die mittlere Auflagestelle (24) zum Einstellen eines Biegeradius quer zum Federband (10) verstellbar ausgebildet ist, durch eine der Biegeeinheit (20) in Vorschubrichtung des Federbandes (10) nachgeordneten Rückbiegeeinheit (22), die eine auf der gleichen Bandseite des Federbandes (10) wie die mittlere Auflagestelle (24) der Biegeeinheit (20) angreifende, vierte Auflagestelle (32) umfasst, die zur Einstellung eines Rückbiegeradius quer zum Federband (10) verstellbar ist, und durch eine Trenneinheit zum Abtrennen des die Biege- und Rückbiegeeinheit (20, 22) durchlaufenden Federbandabschnittes (10) vom Federband (10), wobei die gebogenen Federbandabschnitte aus einem aus einstückig aneinander angeordneten Federbandabschnitten gebildeten Federband (10) hergestellt sind, **dadurch gekennzeichnet, dass** die Verstellbewegungen der mittleren Auflagestelle (24) der Biegeeinheit (20) und der Auflagestelle (32) der Rückbiegeeinheit (22) mittels einer Steuereinheit (29) nach Programmen gesteuert sind.

12. Vorrichtung nach Anspruch 11, **dadurch gekennzeichnet, dass** die Trenneinheit (21) zwischen Biege- und Rückbiegeeinheit (20,22) angeordnet ist.

13. Vorrichtung nach Anspruch 12, **dadurch gekennzeichnet, dass** die Trenneinheit (21) in die Biegeeinheit (20) integriert ist, indem die in Vorschubrichtung des Federbands (10) letzte Auflagestelle (25) der Biegeeinheit (20) als eine über die Federbandbreite sich erstreckende Schnittkante (30) ausgebildet ist, an der ein quer zum Federband (10) bewegliches Schneidmesser (31) vorbeigeführt ist.

14. Vorrichtung nach einem der Ansprüche 11 - 13, **dadurch gekennzeichnet, dass** die Programme die sich ändernde Materialstärke und ggf. unterschiedlich vorgegebene, zonenbezogene Biegeradien der Federbandabschnitte (11) berücksichtigen.

15. Vorrichtung nach Anspruch 14, **dadurch gekennzeichnet, dass** die im Federband (10) aufeinanderfolgenden Federbandabschnitte (11) durch Triggerlöcher (12) im Federband (10) markiert sind, die zum Triggern der Steuereinheit (29) zwecks Auslösen und Beenden der Biege-und Rückbiegeprogramme und Auslösen des Trennvorgangs durch die Trenneinheit (21) dienen.

16. Vorrichtung nach Anspruch 14 oder 15, **dadurch gekennzeichnet, daß** die programmierte Verschiebebewegrung der mittleren Auflagestelle (24) der Biegeeinheit (20) und der Auflagestelle (32) der Rückbiegeeinheit (22) so aufeinander abgestimmt sind, daß der in der Biegeeinheit (20) erzeugte Biegegrad um den Rückbiegegrad größer ist als der vorgegebene Endbiegegrad des Federbandabschnitts (11).

17. Vorrichtung nach Anspruch 16, **dadurch gekennzeichnet, dass** die Größe des Rückbiegegrads empirisch bestimmt ist.

18. Vorrichtung nach Anspruch 16, **dadurch gekennzeichnet, dass** die Größe des Rückbiegegrads auf 10 - 20% des Biegegrads eingestellt ist.

19. Vorrichtung nach einem der Ansprüche 14 - 18, **gekennzeichnet durch** ein Bilderfassungssystem (36) zur optischen Vermessung der vom Federband (10) abgetrennten, endgefertigten Federbandabschnitte (11) und Ermittlung der Abweichung von einer Sollwertvorgabe sowie **durch** eine Korrektureinrichtung (37) zur Korrektur der Biege-und/oder Rückbiegeprogramme in Abhängigkeit von einer mittleren Sollwertabweichung.

20. Vorrichtung nach einem der Ansprüche 13 - 19, **dadurch gekennzeichnet, dass** die in Vorschubrichtung des Federbandes (10) erste Auflagestelle (23) der Biegeeinheit (20) quer zum Federband (10) in Richtung Banddicke, vorzugsweise manuell, verschiebbar ausgebildet ist.

21. Vorrichtung nach einem der Ansprüche 13 - 20, **dadurch gekennzeichnet, dass** die beiden Auflagestellen (23,24) der Biegeeinheit (20) und die Auflagestelle (32) der Rückbiegeeinheit (22) vom Umfang von walzen oder Rollen (26,27 bzw. 33) gebildet sind.

22. Vorrichtung nach einem der Ansprüche 1 - 21, **dadurch gekennzeichnet, dass** das Federband (10) auf einem Vorratswickel (15) aufgewickelt ist und daß das Federband (10) zwischen mindestens zwei auf gegenüberliegenden Bandseiten des Federbandes (10) angreifenden, angetriebenen Vorschubwalzen oder -rollen (13,14) hindurchgeführt ist, die das Federband (10) vom Vorratswickel (15) abziehen und der Biegeeinheit (20) zuführen.

23. Vorrichtung nach einem der Ansprüche 1 - 22, **dadurch gekennzeichnet, dass** der Biegeeinheit (20) mehrere Führungsrollen (16-19) und/oder Führungsschienen vorgeordnet sind, die paarweise auf gegenüberliegenden Seiten des Federbandes (10) an diesem anliegen.

## Claims

1. Method for producing curved spring band portions (11) which are produced from a spring band formed from spring band portions disposed integrally one against the other, and the spring band is bent in a program-controlled manner between three support points which are distanced apart in the feed direction of the spring band and, following one upon the other, bear alternately upon one of the two band sides of the spring band portion, and is then bent back again at a subsequent support point, and the spring band portion which has been treated thus is separated from the spring band, **characterized in that** the middle one of the three support points (24) for the bending of the spring band and the fourth support point for the bending back of the spring band are configured so as to be displaceable, respectively, transversely to the spring band (10) in the direction of the band thickness (d) and their transverse displacements are controlled according to presettable programs.

2. Method according to Claim 1, **characterized in that** the degree of bending of the spring band (10) at the three support points (23-25) is set higher than the required final bending radius of the spring band portion (11) by an amount equating to the degree of bend-back at the fourth support point (32).

3. Method according to Claim 1 or 2, **characterized in that** the degree of bend-back is determined empirically.

4. Method according to Claim 1 or 2, **characterized in that** the degree of bend-back is chosen at 10-20% of the degree of bending.

5. Method according to one of Claims 1-4, **characterized in that** the programs take account of the changing material thickness within the spring band portions (11).

6. Method according to one of Claims 1-5, **characterized in that** the last of the three support points (25) for the spring band bending is configured as a cutting edge (30), past which a cutting blade (31) is guided for the separation of the spring band portions (11).

7. Method according to Claim 6, **characterized in that** the other support points (23, 24, 32) are formed by the circumference of a roll or roller (26, 27, 33).

8. Method according to one of Claims 5-7, **characterized in that** the spring band portions (11) following one upon the other in the spring band (10) are marked by trigger holes (12) in the spring band (10), and **in that** the trigger holes (12) are used to control the start and end of the bending and bend-back programs and of the initiation of the dividing operation.

9. Method according to one of Claims 1-8, **characterized in that** at least a part of the separated spring band portions (11) is optically measured and compared with desired value presets, and **in that** the mean deviations from the desired values are used to correct the bending and bend-back programs.

10. Method according to one of Claims 1-9, **characterized in that** the bending and bending back of the spring band (10) is performed with continuous spring band feed, which in each case is briefly interrupted for the separation of the spring band portions (11).

11. Device for producing curved spring band portions (11), especially with material thicknesses (d) which are variable over the length of the portion, having a bending unit (20) which consists of three mutually distanced support points (23 to 25) and through which a spring band (10), formed by the spring band portions (11) disposed integrally one behind the other, can be guided such that the support points (23 to 25), following one upon the other in the feed direction of the spring band (10), bear alternately against the one and the other band side, the middle support point (24), for the adjustment of a bending radius, being configured so as to be adjustable transversely to the spring band (10), through a bend-back unit (22) which, in the feed direction of the spring band (10), is disposed downstream of the bending unit (20) and comprises a fourth support point (32) that acts upon the same band side of the spring band (10) as the middle support point (24) of the bending unit (20) and that, for the adjustment of a bend-back radius, is adjustable transversely to the spring band (10), and through a dividing unit for separating the spring band portion (10) running through the bending and bend-back unit (20, 22) from the spring band (10), the curved spring band portions being produced from a spring band (10) formed from spring band portions disposed integrally one against the other, **characterized in that** the readjustment movements of the middle support point (24) of the bending unit (20) and of the support point (32) of the bend-back unit (22) are controlled according to programs by means of a control unit (29).

12. Device according to Claim 11, **characterized in that** the dividing unit (21) is disposed between the bending and the bend-back unit (20, 22).

13. Device according to Claim 12, **characterized in that** the dividing unit (21) is integrated in the bending unit (20), by the last support point (25) of the bending unit (20) in the feed direction of the spring band (10) being configured as a cutting edge (30) which extends over the spring band width and past which a cutting blade (31) movable transversely to the spring band (10) is guided.

14. Device according to one of Claims 11-13, **characterized in that** the programs take account of the changing material thickness and, where appropriate, differently preset, zonal bending radii of the spring band portions (11).

15. Device according to Claim 14, **characterized in that** the spring band portions (11) following one upon the other in the spring band (10) are marked by trigger holes (12) in the spring band (10), which serve to trigger the control unit (29) for the purpose of initiating and ending the bending and bend-back programs and initiating the dividing operation by the dividing unit (21).

16. Device according to Claim 14 or 15, **characterized in that** the programmed displacement movement of the middle support point (24) of the bending unit (20) and of the support point (32) of the bend-back unit (22) are mutually coordinated such that the degree of bending generated in the bending unit (20) is higher than the preset final degree of bending of the spring band portion (11) by an amount equating to the degree of bend-back.

17. Device according to Claim 16, **characterized in that** the value of the degree of bend-back is determined empirically.

18. Device according to Claim 16, **characterized in that** the value of the degree of bend-back is set at 10-20% of the degree of bending.

19. Device according to one of Claims 14-18, **characterized by** an image-recording system (36) for optically measuring the finished spring band portions (11) separated from the spring band (10) and of determining the deviation from a desired value preset, and by a correcting device (37) for correcting the bending and/or bend-back programs as a function of a mean desired value deviation.

20. Device according to one of Claims 13-19, **characterized in that** the first support point (23) of the bending unit (20) in the feed direction of the spring band (10) is configured so as to be displaceable, preferably by hand, transversely to the spring band (10) in the direction of the band thickness.

21. Device according to one of Claims 13-20, **characterized in that** the two support points (23, 24) of the bending unit (20) and the support point (32) of the bend-back unit (22) are formed by the circumference of rolls or rollers (26, 27 and 33 respectively).

22. Device according to one of Claims 1-21, **characterized in that** the spring band (10) is wound on a supply reel (15), and **in that** the spring band (10) is guided through between at least two driven feed rolls or rollers (13, 14) which act upon opposite band sides of the spring band (10) and which draw off the spring band (10) from the supply reel (15) and feed it to the bending unit (20).

23. Device according to one of Claims 1-22, **characterized in that** upstream of the bending unit (20) there are disposed a plurality of guide rollers (16-19) and/or guide rails, which, on opposite sides of the spring band (10), bear against the latter in pairs.

## Revendications

1. Procédé pour la production de segments de ressort à ruban cintrés (11), fabriqués à partir d'un ruban à ressort formé de segments de ruban à ressort assemblés d'un seul tenant l'un à l'autre, et dont le ruban à ressort est, sous la commande d'un programme, cintré entre trois points d'appui distants l'un de l'autre dans la direction de progression du ruban à ressort et s'appliquant à la suite l'un de l'autre en alternance sur une des deux faces de ruban du segment de ressort à ruban, et ensuite cintré en sens inverse sur un point d'appui suivant, le segment de ruban à ressort ainsi traité étant détaché du ruban à ressort,
**caractérisé en ce que**
le point d'appui central des trois points d'appui (24) pour le cintrage du ruban à ressort et le quatrième point d'appui pour le cintrage inverse du ruban à ressort sont déplaçables transversalement au ruban à ressort (10) dans la direction de l'épaisseur du ruban (d) et leurs déplacements transversaux sont commandés selon des programmes qui peuvent être prédéterminés.

2. Procédé selon la revendication 1,
**caractérisé en ce que**
le degré de cintrage du ruban à ressort (10) dans les trois points d'appui (23-25) est augmenté du degré de cintrage inverse appliqué sur le quatrième point d'appui (32) par rapport au rayon de cintrage final requis pour le segment de ressort à ruban (11).

3. Procédé selon la revendication 1 ou 2,
**caractérisé en ce que**
le degré de cintrage inverse est déterminé de manière empirique.

4. Procédé selon la revendication 1 ou 2,
**caractérisé en ce que**
le degré de cintrage inverse est choisi à une valeur de 10 - 20 % du degré de cintrage.

5. Procédé selon l'une quelconque des revendications 1 à 4,
**caractérisé en ce que**
les programmes tiennent compte de l'épaisseur de matière variable à l'intérieur du segment de ressort à ruban (11).

6. Procédé selon l'une quelconque des revendications 1 à 5,
**caractérisé en ce que**
le dernier des trois points d'appui (25) pour le cintrage du ruban à ressort est formé par une arête de coupe (30), devant laquelle une lame de coupe (31) est guidée pour la séparation des segments de ressort à ruban (11).

7. Procédé selon la revendication 6,
**caractérisé en ce que**
les autres points d'appui (23, 24, 32) sont formés par la périphérie d'un cylindre ou d'un rouleau (26, 27, 33).

8. Procédé selon l'une quelconque des revendications 5 à 7,
**caractérisé en ce que**
les segments de ressort à ruban (11) se succédant dans le ruban à ressort (10) sont marqués par des trous de déclenchement (12) dans le ruban à ressort (10), et trous de déclenchement (12) sont utilisés pour commander le début et la fin des programmes de cintrage et de cintrage inverse ainsi que pour déclencher l'opération de séparation.

9. Procédé selon l'une quelconque des revendications 1 à 8,
**caractérisé en ce qu'**
au moins une partie des segments de ressort à ruban séparés (11) sont mesurés optiquement et sont comparés avec des valeurs de consigne prédéterminées, et les écarts moyens par rapport aux valeurs de consigne sont utilisés pour la correction des programmes de cintrage et de cintrage inverse.

10. Procédé selon l'une quelconque des revendications 1 à 9,
**caractérisé en ce que**
le cintrage et le cintrage inverse du ruban à ressort (10) sont exécutés pendant une progression continue du ruban à ressort, qui est temporairement interrompue pour la séparation des segments de ressort à ruban (11).

11. Dispositif pour la production de segments de ressort à ruban cintrés (11), en particulier avec des épaisseurs de matière (d) variables sur la longueur des segments, comprenant :
- une unité de cintrage (20) composée de trois points d'appui distants l'un de l'autre (23 à 25), à travers lesquels un ruban à ressort (10) formé par les segments de ressort à ruban (11) disposés d'un seul tenant l'un derrière l'autre peut être conduit de telle façon que les points d'appui (23 à 25) qui se succèdent dans la direction de progression du ruban à ressort (10) s'appliquent en alternance sur l'un et l'autre côté du ruban, dont le point d'appui central (24) est réglable transversalement au ruban à ressort (10) pour le réglage d'un rayon de cintrage,
- une unité de cintrage inverse (22) disposée après l'unité de cintrage (20) dans la direction de progression du ruban à ressort (10), et qui comprend un quatrième point d'appui (32) agissant sur le même côté de ruban du ruban à ressort (10) que le point d'appui central (24) de l'unité de cintrage (20), et qui est réglable transversalement au ruban à ressort (10) pour le réglage d'un rayon de cintrage inverse, et
- une unité de séparation pour séparer le segment de ressort à ruban (11) traversant les unités de cintrage et de cintrage inverse (20, 22) du ruban à ressort (10), dans laquelle les segments de ressort à ruban cintrés sont fabriqués à partir d'un ruban à ressort (10) formé de segments de ressort à ruban disposés d'un seul tenant l'un derrière l'autre,
**caractérisé en ce que**
les mouvements de réglage du point d'appui central (24) de l'unité de cintrage (20) et du point d'appui (32) de l'unité de cintrage inverse (22) sont commandés selon des programmes au moyen d'une unité de commande (29).

12. Dispositif selon la revendication 11,
**caractérisé en ce que**
l'unité de séparation (21) est disposée entre l'unité de cintrage (20) et l'unité de cintrage inverse (22).

13. Dispositif selon la revendication 12,
**caractérisé en ce que**
l'unité de séparation (21) est intégrée dans l'unité de cintrage (20), du fait que le dernier point d'appui (25) de l'unité de cintrage (20) dans la direction de progression du ruban à ressort (10) est formée par une arête de coupe (30) s'étendant sur la largeur du ruban à ressort, devant laquelle une lame de coupe (31) est guidée transversalement au ruban à ressort (10).

14. Dispositif selon l'une quelconque des revendications 11 à 13,
**caractérisé en ce que**
les programmes tiennent compte de l'épaisseur de matière variable et le cas échéant de rayons de cintrage différents prédéterminés par zones des segments de ressort à ruban (11).

15. Dispositif selon la revendication 14,
**caractérisé en ce que**
les segments de ressort à ruban (11) se succédant dans le ruban à ressort (10) sont marqués par des trous de déclenchement (12) dans le ruban à ressort (10), qui servent pour activer l'unité de commande (29) en vue de déclencher et de terminer les programmes de cintrage et de cintrage inverse et pour déclencher l'opération de séparation par l'unité de séparation (21).

16. Dispositif selon la revendication 14 ou 15,
**caractérisé en ce que**
les mouvements de déplacement programmés du point d'appui central (24) de l'unité de cintrage (20) et du point d'appui (32) de l'unité de cintrage inverse (22) sont accordés l'un à l'autre de telle manière que le degré de cintrage produit dans l'unité de cintrage (20) soit augmenté du degré de cintrage inverse par rapport au rayon de cintrage final prédéterminé pour le segment de ressort à ruban (11).

17. Dispositif selon la revendication 16,
**caractérisé en ce que**
la grandeur du degré de cintrage inverse est déterminée de manière empirique.

18. Dispositif selon la revendication 16,
**caractérisé en ce que**
la grandeur du degré de cintrage inverse est réglée à une valeur de 10 - 20 % du degré de cintrage.

19. Dispositif selon l'une quelconque des revendications 14 à 18,
**caractérisé par**
un système de détection d'image (36) pour la mesure optique des segments de ressort à ruban terminés (11) séparés du ruban à ressort (10) et pour la détermination de l'écart par rapport à une valeur de consigne prédéterminée, ainsi que par un dispositif de correction (37) pour la correction des programmes de cintrage et/ou de cintrage inverse en fonction d'un écart moyen par rapport à la valeur de consigne.

20. Dispositif selon l'une quelconque des revendications 13 à 19,
**caractérisé en ce que**
le premier point d'appui (23) de l'unité de cintrage (20) dans la direction de progression du ruban à ressort (10) est déplaçable, de préférence manuellement, transversalement au ruban à ressort (10) dans la direction de l'épaisseur du ruban.

21. Dispositif selon l'une quelconque des revendications 13 à 20,
**caractérisé en ce que**
les deux points d'appui (23, 24) de l'unité de cintrage (20) et le point d'appui (32) de l'unité de cintrage inverse (22) sont formés par la périphérie de cylindres ou de rouleaux (26, 27 respectivement 33).

22. Dispositif selon l'une quelconque des revendications 1 à 21,
**caractérisé en ce que**
le ruban à ressort (10) est enroulé sur une bobine de stockage (15), et le ruban à ressort (10) est conduit entre au moins deux cylindres ou rouleaux d'avancement entraînés (13, 14) agissant sur des côtés opposés du ruban à ressort (10), qui tirent le ruban à ressort de la bobine de stockage (15) et l'envoient à l'unité de cintrage (20).

23. Dispositif selon l'une quelconque des revendications 1 à 22,
**caractérisé en ce que**
l'unité de cintrage (20) est précédée par plusieurs rouleaux de guidage (16 - 19) appliqués par paires sur le ruban à ressort (10) sur des côtés opposés de celui-ci.
